# EUROPEAN PATENT APPLICATION

(11) **EP 4 832 168 A1**
(43) Date of publication of application: **28.10.2026**
(21) Application number: 25793312.7
(22) Date of filing: 19.03.2025
(51) Int. Cl.: H01M 10/613, H01M 10/615, H01M 10/6556, H01M 10/6568, H01M 10/625

(54) **BATTERY AND ELECTRICAL APPARATUS**

(30) Priority: 24.04.2024 CN 202420869133 U
(71) Applicant: Contemporary Amperex Technology Co., Limited, Ningde, Fujian 352100 (CN)
(72) Inventor: ZHOU, Cong, Ningde, Fujian 352100 (CN); HOU, Yuepan, Ningde, Fujian 352100 (CN)
(74) Representative: Aera A/S
(86) International application number: PCT/CN2025/083418
(87) International publication number: WO 2025/223114

(57) **Abstract**

The present application relates to a battery and an electrical apparatus. The battery comprises a case body, a battery cell and a thermal management component, the battery cell being arranged in the case body, and the thermal management component being arranged in the case body and used for accommodating a heat exchange medium so as to adjust the temperature of the battery cell. The thermal management component comprises: a heat exchange tube, having a heat exchange flow channel, end portions of the heat exchange tube being ports of the heat exchange flow channel; and current collectors, fitted to the end portions of the heat exchange tube and communicated with the ports, wherein the heat exchange medium can flow into the heat exchange flow channel from the current collectors or flow into the current collectors from the heat exchange flow channel, and at least one of the current collectors and the heat exchange tube is a plastic structure. In the present application, the current collectors are fitted to the end portions of the heat exchange tube, and connection between the current collectors and the heat exchange tube is achieved by means of connection members, such that the heat exchange tube and the current collectors can be well attached via the surfaces of the end portions, and the connection between the heat exchange tube and the current collectors is achieved by means of the connection members, thus improving the connection stability between the heat exchange tube and the current collectors.

## Description

### CROSS-REFERENCE

The present application refers to Chinese Patent Application No. 2024208691331, entitled "THERMAL MANAGEMENT COMPONENT, BATTERY, AND ELECTRIC DEVICE", filed on April 24, 2024, which is incorporated herein by reference in its entirety.

### TECHNICAL FIELD

The present application relates to the technical field of batteries, and in particular, to a battery and an electric device.

### BACKGROUND

Energy conservation and emission reduction are the keys to the sustainable development of the automobile industry. Electric vehicles have become an important part of the sustainable development of the automobile industry due to their energy-saving and environmental protection advantages. For electric vehicles, the battery technology is an important factor in their development.

Temperature has a significant impact on the performance of a battery. Therefore, in conventional technologies, a battery is provided with a thermal management component for cooling the battery or heating the battery in a low-temperature environment, thereby enabling the battery to reach a normal operating temperature range.

However, in the current thermal management component, it is difficult to control the dimension and the surface flatness of a heat exchange tube, which easily leads to poor connection when the heat exchange tube is connected to a manifold, thereby affecting the overall performance of the thermal management component.

### SUMMARY

Based on this, the present application provides a battery and an electric device.

In a first aspect, the present application provides a battery. The battery includes a case, a battery cell, and a thermal management component. The battery cell is disposed in the case. The thermal management component is disposed in the case and is configured to accommodate a heat exchange medium to regulate a temperature of the battery cell. The thermal management component includes a heat exchange tube and a manifold. The heat exchange tube is provided with a heat exchange flow channel, an end part of the heat exchange tube being a port of the heat exchange flow channel; the manifold is engaged with the end part of the heat exchange tube and is in communication with the port, a heat exchange medium being capable of flowing into the heat exchange flow channel via the manifold or flowing into the manifold via the heat exchange flow channel. At least one of the manifold and the heat exchange tube is a plastic structure.

In some embodiments, the thermal management component further includes a connecting member. The connecting member is connected between the heat exchange tube and the manifold and is connected to side walls or outer peripheral walls of the manifold and the heat exchange tube.

In some embodiments, the connecting member is a plastic structure.

In some embodiments, the connecting member is of an annular structure and is disposed surrounding outer peripheries of the heat exchange tube and the manifold.

With the above structure, in one aspect, the connecting member will wrap a connection position between the heat exchange tube and the manifold, thereby providing a certain protective effect on the connection position. In another aspect, the connecting member will also achieve a fixed connection between the manifold and the heat exchange tube, thereby achieving the assembly of the two.

In some embodiments, the manifold includes a main body part and a plurality of support members, the main body part is engaged with the heat exchange tube, and the support members are spaced apart from each other in a circumferential direction of the main body part.

By providing the support members, the support members will support the heat exchange tube, thereby fixing the dimension of a port position of the heat exchange tube, improving the flatness of the port position, and achieving a good fit between the heat exchange tube and the manifold. Then, the connection between the heat exchange tube and the manifold is achieved by the connecting member. As such, the connection stability between the heat exchange tube and the manifold will be improved. In addition, the plurality of support members spaced apart from each other provide multi-point support for the heat exchange flow channel, thereby improving the supporting stability.

In some embodiments, when the main body part is engaged with the heat exchange tube, at least one support member extends into the heat exchange flow channel.

In some embodiments, when the main body part is engaged with the heat exchange tube, two support members extend into the heat exchange flow channel. Thus, the support members extending into the heat exchange flow channel will provide more stable support for the heat exchange flow channel.

In some embodiments, each support member is provided with a supporting surface, and the supporting surface and an inner wall of the heat exchange tube abut against each other. With the supporting surface, the support member and the inner wall of the heat exchange tube are enabled to abut against each other more stably, thereby improving the supporting stability of the support member for the heat exchange flow channel.

In some embodiments, the main body part includes a first connecting part and a second connecting part formed on a surface of the first connecting part; a step surface is formed between the first connecting part and the second connecting part; one end of the connecting member wraps the step surface, and another end wraps an outer periphery of the heat exchange tube.

With the above structure, when the connecting member is connected between the heat exchange tube and the manifold, the connecting member will separately wrap the outer periphery of the heat exchange tube and the step surface, thereby improving the connection stability between the manifold and the heat exchange tube.

In some embodiments, the first connecting part is provided with a first end surface, the second connecting part is disposed on the first end surface, and the first end surface intersects the step surface; the first end surface is configured to abut against an end surface of the connecting member for limiting.

By providing a first end surface, a step structure is formed between the first end surface and the second connecting part, such that when the connecting member sleeves the second connecting part, a limiting fit will be formed between the connecting member and the first end surface, thereby improving the assembly efficiency.

In some embodiments, one end, facing away from the first connecting part, of the second connecting part is provided with a second end surface, and the second end surface abuts against an end surface of the heat exchange tube; each support member protrudes from the second end surface, and a supporting surface of each support member is offset from the end surface of the heat exchange tube, so as to be fitted to an inner wall of the heat exchange tube.

Thus, the support member will provide more stable support for the inner wall of the heat exchange tube, thereby ensuring a more stable connection between the heat exchange tube and the manifold.

In some embodiments, the manifold further includes a wrapping part disposed on the first connecting part; the wrapping part is disposed surrounding an outer periphery of the second connecting part, the wrapping part and the second connecting part are spaced apart from each other, and a limiting groove is formed by a spacing therebetween; the limiting groove is configured to be snap-fitted to the heat exchange tube.

Thus, by disposing the connecting member surrounding an outer periphery of the wrapping part, when the connecting member is fixed by an overmolding process, the wrapping part will prevent the overflow of molten plastic into an interior of the heat exchange tube or the manifold during the injection molding process, thereby providing a certain protective effect.

In some embodiments, the battery includes a plurality of battery cells and a plurality of thermal management components, the plurality of battery cells are arranged in a plurality of rows, and each row of the battery cells is disposed between two adjacent thermal management components.

In a second aspect, the present application further provides an electric device. The electric device includes the battery described above, the battery being used for providing electric energy.

According to the above battery and electric device, the manifold is engaged with the end part of the heat exchange tube, and the connection between the manifold and the heat exchange tube is achieved by the connecting member. Thus, a good fit will be achieved between the heat exchange tube and the manifold by a surface of the end part, and then the connection between the heat exchange tube and the manifold is achieved by the connecting member, thereby improving the connection stability between the heat exchange tube and the manifold.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to one or more embodiments.
FIG. 2 is a schematic diagram of an exploded structure of a battery according to one or more embodiments.
FIG. 3 is a schematic structural diagram of a thermal management component according to one or more embodiments.
FIG. 4 is an exploded view of a thermal management component according to one or more embodiments.
FIG. 5 is a partially enlarged view of the portion A in FIG. 4.
FIG. 6 is a schematic structural diagram of a manifold of a thermal management component according to one or more embodiments.
FIG. 7 is a schematic structural diagram of a manifold of a thermal management component according to one or more embodiments.

Description of reference numerals: 1000, vehicle; 100, battery; 200, controller; 300, motor; 10, case; 20, battery cell; 30, thermal management component; 11, first part; 12, second part; 31, heat exchange tube; 32, manifold; 33, connecting member; 311, heat exchange flow channel; 321, opening; 322, support member; 323, main body part; 324, first connecting part; 325, second connecting part; 326, step surface; 327, first end surface; 328, second end surface; 329, wrapping part; 330, limiting groove; a, preset direction.

### DETAILED DESCRIPTION

To make the above objectives, features, and advantages of the present application more apparent and easy to understand, specific embodiments of the present application will be described in detail below with reference to the drawings. In the following description, numerous specific details are set forth in order to provide a thorough understanding of the present application. However, the present application can be implemented in many other ways different from those described herein, and similar improvements can be made by those skilled in the art without departing from the spirit of the present application. Therefore, the present application is not limited to the specific embodiments disclosed below.

In the description of the present application, it should be understood that if there are the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, orientations or positional relationships indicated by these terms are based on the orientations or positional relationships shown in the drawings. They are merely for the convenience of describing the present application and simplifying the description, rather than indicating or implying that the apparatus or element referred to must have a specific orientation or be constructed and operated in the specific orientation, and thus should not be construed as limiting the present application.

In addition, if there are the terms "first" and "second", these terms are used for description only and are not to be construed as indicating or implying relative importance or to implicitly indicate the number of technical features indicated. Thus, a feature defined by "first" or "second" may explicitly or implicitly indicate that at least one such feature is included. In the description of the present application, if there is the term "plurality of", unless otherwise explicitly and specifically defined, "plurality of" means at least two, for example, two, three, and the like.

In the present application, unless otherwise explicitly specified and defined, if there are the terms "mount", "interconnect", "connect", "fix", and the like, these terms should be interpreted in their broad senses. For example, unless otherwise explicitly defined, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the present application can be understood based on specific conditions.

In the present application, unless otherwise explicitly specified and defined, if there is a description that a first feature is "above" or "below" a second feature and other similar descriptions, the meanings thereof may be that the first feature and the second feature are in direct contact, or that the first feature and the second feature are in indirect contact via an intermediate. Moreover, a first feature being "on", "above", and "over" a second feature may be that the first feature is directly above or obliquely above the second feature, or simply indicates that the level of the first feature is higher than that of the second feature. A first feature being "under", "below", and "beneath" a second feature may be that the first feature is directly below or obliquely below the second feature, or simply indicates that the level of the first feature is lower than that of the second feature.

It should be noted that if an element is referred to as being "fixed to" or "disposed on" another element, the element may be directly on the other element or there may be an intermediate element in between. If an element is referred to as being "connected" to another element, the element may be directly connected to the other element or there may also be an intermediate element in between. The terms "perpendicular", "horizontal", "upper", "lower", "left", "right", and similar descriptions, if present, are used in the present application for description only and do not necessarily indicate the only implementation.

At present, judging from the trends in the market, the application of power batteries is becoming increasingly widespread. Power batteries are not only applied in energy storage power systems such as hydropower, thermal power, wind power, and solar power stations, but are also widely applied in electric transportation vehicles such as electric bicycles, electric motorcycles, and electric cars, and other fields. With the continuous expansion of the application field of power batteries, the market demand for power batteries is also constantly increasing.

The battery generally includes a battery cell and a case. The battery cell is placed in the case, and the case can provide an accommodating space for the battery cell and provide a certain protective effect. For a battery, a battery cell is a component in which an electrochemical reaction actually occurs. When an electrochemical reaction occurs inside the battery cell, heat is generated.

With the cycling of the battery, the battery cell continuously generates heat, such that the temperature inside the battery gradually rises, which affects the performance of the battery. Therefore, at present, a thermal management component is generally disposed inside the battery for cooling the battery or heating the battery in a low-temperature environment, thereby enabling the battery to reach a normal operating temperature range.

However, in the structure of the thermal management component, a port of a heat exchange tube is flat, and the dimension and the surface flatness of the heat exchange tube are difficult to control. When the heat exchange tube is connected to the manifold, poor fitting occurs between the connecting surfaces, such that the connection between the heat exchange tube and the manifold is poor, which affects the overall performance of the thermal management component.

Based on the above considerations, in order to solve the problem at present that a poor connection is prone to occur when the heat exchange tube is connected to the manifold, one or more embodiments of the present application provide a battery. When the heat exchange tube is connected to the manifold, the manifold is engaged with an end part of the heat exchange tube, and the connection between the manifold and the heat exchange tube is achieved by a connecting member. Thus, a good fit will be achieved between the heat exchange tube and the manifold by a surface of the end part, and then the connection between the heat exchange tube and the manifold is achieved by the connecting member, thereby improving the connection stability between the heat exchange tube and the manifold.

The embodiments of the present application provide an electric device using a battery as the power source. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of explanation, the following embodiments are described by taking a vehicle 1000 as an example of the electric device according to an embodiment of the present application.

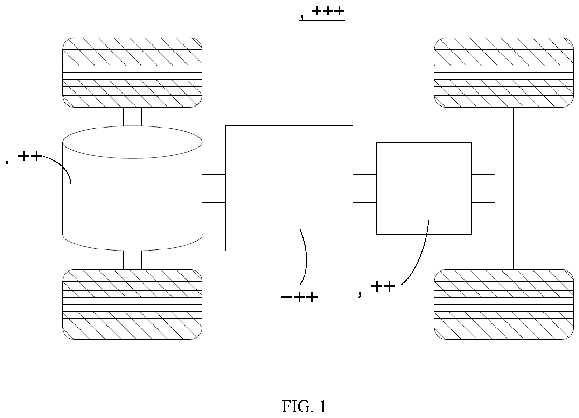

Referring to FIG. 1, the vehicle 1000 may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle 1000, and the battery 100 may be disposed at the bottom, head, or tail of the vehicle 1000. The battery 100 may be configured to supply power to the vehicle 1000. For example, the battery 100 may serve as an operation power source for the vehicle 1000. The vehicle 1000 may further include a controller 200 and a motor 300. The controller 200 is configured to control the battery 100 to supply power to the motor 300, e.g., for the operation power needed by the vehicle 1000 for start-up, navigation, and driving.

In some embodiments of the present application, the battery 100 may not only serve as the operation power source for the vehicle 1000, but also as a driving power source for the vehicle 1000 to, replacing or partially replacing fuel or natural gas, provide driving power for the vehicle 1000.

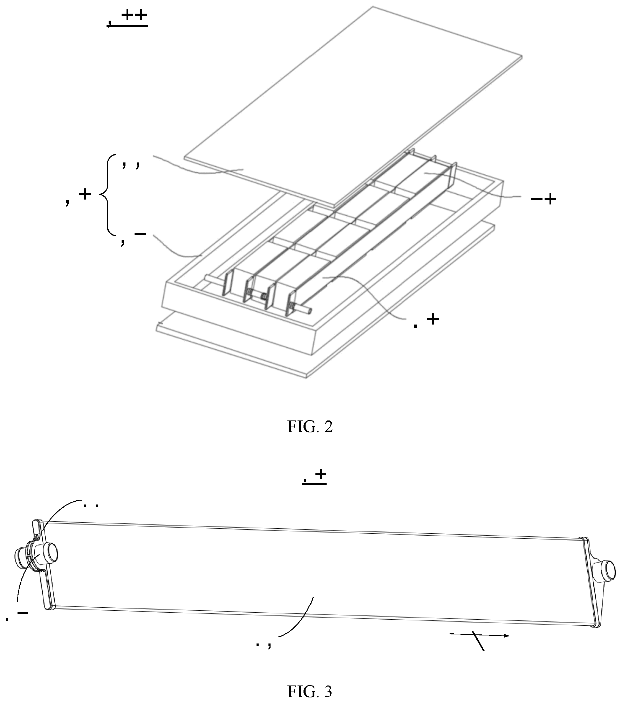

Referring to FIG. 2, the battery 100 includes a case 10 and battery cells 20. The battery cells 20 are accommodated in the case 10. The case 10 is configured to provide an accommodating space for the battery cells 20, and the case 10 may be of various structures. In some embodiments, the case 10 may include a first part 11 and a second part 12. The first part 11 and the second part 12 are lidded with each other, and the first part 11 and the second part 12 jointly define an accommodating space for accommodating the battery cells 20. The second part 12 may be of a hollow structure with one end open, and the first part 11 may be of a plate-shaped structure. The open side of the second part 12 is lidded with the first part 11, such that the first part 11 and the second part 12 jointly define the accommodating space. The first part 11 and the second part 12 may also both be of a hollow structure with one side open, and the open side of the second part 12 is lidded with the open side of the first part 11. Certainly, the case 10 formed by the first part 11 and the second part 12 may be in various shapes, such as a cylinder and a rectangular parallelepiped.

In the battery 100, a plurality of battery cells 20 may be provided, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, the situation may also be that in the battery 100, the plurality of battery cells 20 are first connected in series, in parallel, or in series-parallel to form battery modules, and then the plurality of battery modules are connected in series, in parallel, or in series-parallel to form a whole and accommodated in the case 10. The battery 100 may further include other structures. For example, the battery 100 may further include a busbar component for achieving an electrical connection among the plurality of battery cells 20.

Each battery cell 20 may be a secondary battery or a primary battery; it may also be a lithium-sulfur battery, a sodium-ion battery, or a magnesium-ion battery, but is not limited thereto. The battery cell 20 may be cylindrical, flat, rectangular parallelepiped-shaped, or in other shapes.

Referring to FIGs. 3, 4, and 5, an embodiment of the present application provides a battery 100. The battery includes a case 10, a battery cell 20, and a thermal management component 30. The battery cell 20 is disposed in the case 10. The thermal management component 30 is disposed in the case 10 and configured to accommodate a heat exchange medium to regulate the temperature of the battery cell 20. The thermal management component 30 includes a heat exchange tube 31 and a manifold 32. The heat exchange tube 31 is provided with a heat exchange flow channel 311, and an end part of the heat exchange tube 31 is a port of the heat exchange flow channel 311. The manifold 32 is engaged with the end part of the heat exchange tube 31 and in communication with the port, and a heat exchange medium can flow into the heat exchange flow channel 311 via the manifold 32 or flow into the manifold 32 via the heat exchange flow channel 311. At least one of the manifold 32 and the heat exchange tube 31 is a plastic structure.

In some embodiments, the thermal management component 30 further includes a connecting member 33. The connecting member 33 is connected between the heat exchange tube 31 and the manifold 32 and is connected to side walls or outer peripheral walls of the manifold 32 and the heat exchange tube 31.

Further, the connecting member 33 is a plastic structure.

The thermal management component 30 refers to a component disposed in the case 10 of the battery 100 and configured to accommodate the heat exchange medium to regulate the temperature of the battery cell 20 in the case 10. The battery cell 20 generates heat during cycling, and the battery cell 20 may be cooled by the thermal management component 30. In this case, the thermal management component 30 may accommodate a cooling medium, and the thermal management component 30 may also be referred to as a cooling member, a cooling system, a cooling plate, a liquid cooling plate, or the like. Certainly, in some other cases, the thermal management component 30 may also be configured to heat the battery cell 20, which is not described in detail herein.

The heat exchange flow channel 311 is formed inside the heat exchange tube 31. The heat exchange flow channel 311 may extend in a preset direction a, thereby providing a flow path for the heat exchange medium. By arranging the heat exchange tube 31 to be fitted to a surface of the battery cell 20, when the heat exchange medium flows in the heat exchange flow channel 311, the heat generated by the battery cell 20 will be taken away, thereby achieving the cooling of the battery cell 20.

Further, the manifold 32 is disposed at two opposite ends of the heat exchange tube 31 in the preset direction a, and an opening 321 in communication with the port of the heat exchange flow channel 311 is formed on the manifold 32.

Specifically, the heat exchange flow channel 311 extends in a preset direction a and penetrates through the heat exchange tube 31 in the preset direction a. In other words, one end, in the preset direction a, of the heat exchange flow channel 311 forms an inlet, and the other end of the heat exchange flow channel forms an outlet. The heat exchange medium is introduced into the heat exchange flow channel 311 from the inlet and flows out from the outlet, thereby achieving heat exchange during this process.

The manifold 32 is disposed at two opposite ends of the heat exchange tube 31 in the preset direction a. When the manifold 32 is disposed on an inlet side of the heat exchange flow channel 311, an opening 321 on the manifold 32 is an input port for the heat exchange medium. When the manifold 32 is disposed on an outlet side of the heat exchange flow channel 311, the opening 321 on the manifold 32 is an output port for the heat exchange medium.

When the manifold 32 is connected to the heat exchange tube 31, the opening 321 on the manifold 32 is in communication with the heat exchange flow channel 311. Thus, the heat exchange medium may be input into the heat exchange flow channel 311 via the input port on the manifold 32, such that the heat exchange medium can flow in the heat exchange flow channel 311 and take away the heat of the battery cell 20, and finally flow out from the output port on the manifold 32.

It should be noted that the heat generated by the battery cell 20 is generally concentrated on a large surface of the battery cell 20. Therefore, the heat exchange tube 31 is fitted to the large surface of the battery cell 20, such that the heat exchange medium can better exchange heat with the large surface of the battery cell 20. In this way, the heat exchange tube 31 is generally configured as a flat structure to match the large surface of the battery cell 20.

The heat exchange tube 31 is hollow inside to form the heat exchange flow channel 311, making it difficult to control the dimension and the surface flatness at the port of the heat exchange tube 31. When the heat exchange tube 31 is connected to the manifold 32, the heat exchange tube 31 may not be completely fitted to the manifold 32, which may also lead to an unstable connection between the heat exchange tube 31 and the manifold 32.

Based on this, in the present application, the manifold 32 is engaged with the end part of the heat exchange tube 31, and then the connecting member 33 is connected to the side walls or the outer peripheral walls of the manifold 32 and the heat exchange tube 31, such that a good fit can be achieved between the heat exchange tube 31 and the manifold 32 by the surface of the end part. Then, the connection between the heat exchange tube 31 and the manifold 32 is achieved by injection molding of the connecting member 33. As such, the connection stability between the heat exchange tube 31 and the manifold 32 will be improved.

In some embodiments, the connecting member 33 is of an annular structure and is disposed surrounding outer peripheries of the heat exchange tube 31 and the manifold 32.

Specifically, the connecting member 33 is configured as an annular structure. After the manifold 32 is connected to the heat exchange tube 31, the connecting member 33 is disposed surrounding an outer periphery of a connection position between the heat exchange tube 31 and the manifold 32. In one aspect, the connecting member 33 will wrap the connection position between the heat exchange tube 31 and the manifold 32, thereby providing a certain protective effect on the connection position. In another aspect, the connecting member 33 will also achieve a fixed connection between the manifold 32 and the heat exchange tube 31, thereby achieving the assembly of the two.

In some embodiments, the connecting member 33 is configured as an injection-molded ring.

After the manifold 32 is connected to the heat exchange tube 31, the injection-molded ring may be injection molded onto the outer peripheries of the heat exchange tube 31 and the manifold 32 by an overmolding process, thereby achieving the connection between the heat exchange tube 31 and the manifold 32.

The manifold 32, the heat exchange tube 31, and the connecting member 33 may be made of materials with similar melting points and fusion compatibility. In this way, when the connecting member 33 is injection molded between the manifold 32 and the heat exchange tube 31, in one aspect, the connecting member 33 will achieve the connection between the manifold 32 and the heat exchange tube 31. In another aspect, upon melting, the connecting member 33 will fill a gap at the connection position between the manifold 32 and the heat exchange tube 31, thereby further improving the connection tightness between the two and ensuring a more stable connection.

In some embodiments, the manifold 32 includes a main body part 323 and a plurality of support members 322, the main body part 323 is engaged with the heat exchange tube 31, and the support members 322 are spaced apart from each other in a circumferential direction of the main body part 323.

When the manifold 32 is connected to the heat exchange tube 31, the support member 322 extends into the heat exchange flow channel 311 in the preset direction a, thereby providing support for the heat exchange flow channel 311 at a port position of the heat exchange tube 31, ensuring a more stable structure at the port position of the heat exchange tube 31, and ensuring a flatter surface. In this way, the heat exchange tube 31 will be well fitted to the manifold 32, thereby improving the connection stability therebetween.

In addition, the plurality of support members 322 spaced apart from each other provide multi-point support for the heat exchange flow channel 311, thereby improving the supporting stability.

In some embodiments, when the main body part 323 is engaged with the heat exchange tube 31, at least one support member 322 extends into the heat exchange flow channel 311.

Further, when the main body part 323 is engaged with the heat exchange tube 31, two support members 322 extend into the heat exchange flow channel 311. The support members 322 provide support for the heat exchange flow channel 311. Therefore, in practical applications, the specific number of the support members 322 extending into the heat exchange flow channel 311 may be set according to the actual dimension and actual situation of the heat exchange flow channel 311, which will not be repeated herein.

With the above structure, the support members 322 extending into the heat exchange flow channel 311 will provide more stable support for the heat exchange flow channel 311.

In some embodiments, each support member 322 is provided with a supporting surface, and the supporting surface and an inner wall of the heat exchange tube 31 abut against each other.

Specifically, each support member 322 may be configured as a sheet-like structure. When the heat exchange tube 31 is connected to the connecting part 324, each support member 322 of the sheet-like structure extends into the heat exchange flow channel 311, and the supporting surface is a surface, facing an inner wall of the heat exchange flow channel 311, of each support member 322, such that the supporting surface can be fitted to the inner wall of the heat exchange flow channel 311, thereby providing better support.

Thus, with the supporting surface, the support member 322 and the inner wall of the heat exchange tube 31 are enabled to abut against each other more stably, thereby improving the supporting stability of the support member 322 for the heat exchange flow channel 311.

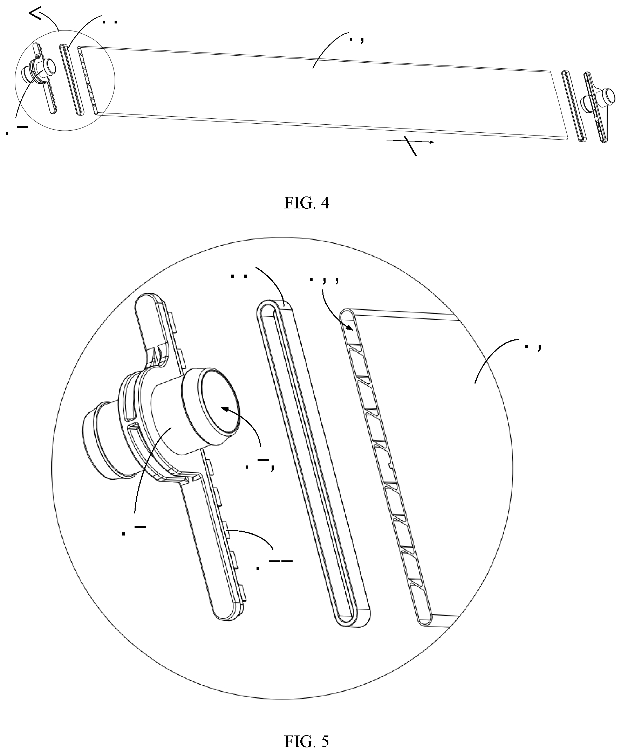

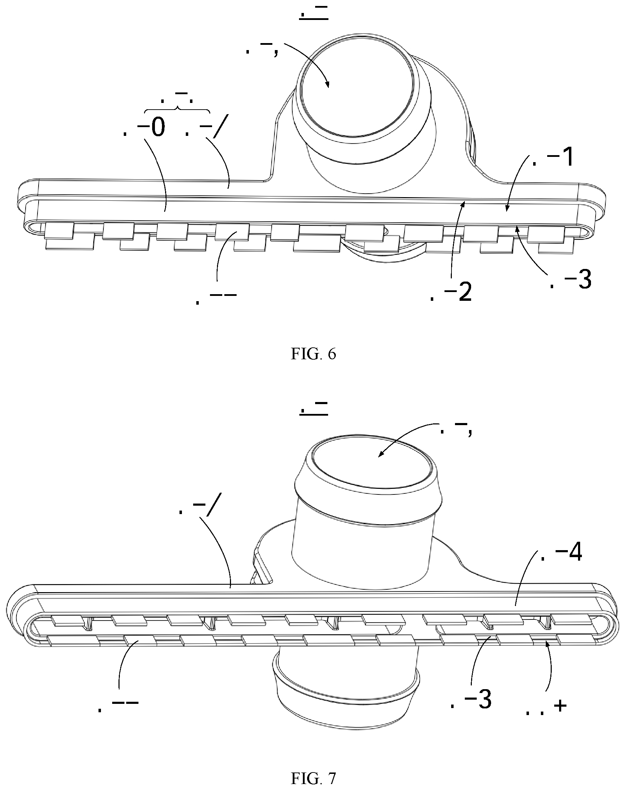

Referring to FIGs. 5 and 6, in some embodiments, the main body part 323 includes a first connecting part 324 and a second connecting part 325 formed on a surface of the first connecting part 324; a step surface 326 is formed between the first connecting part 324 and the second connecting part 325; one end of the connecting member 33 wraps the step surface 326, and another end wraps an outer periphery of the heat exchange tube 31.

Specifically, an end surface of the heat exchange tube 31 abuts against the first connecting part 324, such that the support member 322 extends into the heat exchange flow channel 311, thereby supporting the heat exchange flow channel 311.

Thus, the first connecting part 324 will achieve the connection between the manifold 32 and the heat exchange tube 31, and the support member 322 protrudes from the second connecting part 325, thereby providing support for the heat exchange flow channel 311 of the heat exchange tube 31.

With the above structure, when the connecting member 33 is connected between the heat exchange tube 31 and the manifold 32, the connecting member 33 will separately wrap the outer periphery of the heat exchange tube 31 and the step surface 326, thereby improving the connection stability between the manifold 32, the connecting member 33, and the heat exchange tube 31.

In some embodiments, the first connecting part 324 is provided with a first end surface 327, the second connecting part 325 is disposed on the first end surface 327, and the first end surface 327 intersects the step surface 326. The first end surface 327 is configured to abut against an end surface of the connecting member 33 for limiting.

Specifically, the first end surface 327 and the step surface 326 are disposed perpendicular to each other, the step surface 326 is parallel to the preset direction a, and the first end surface 327 is perpendicular to the preset direction a.

When the manifold 32 is connected to the heat exchange tube 31, the end surface of the heat exchange tube 31 abuts against an end surface of the second connecting part 325, such that the support member 322 can extend into the heat exchange flow channel 311, thereby supporting the heat exchange flow channel 311. Meanwhile, the injection-molded ring surrounds the step surface 326 and the outer periphery of the heat exchange tube 31. The step surface 326 and an outer surface of the heat exchange tube 31 are both fitted to an inner wall of the injection-molded ring.

With the above structure, the step surface 326 and an inner wall of the connecting member 33 will be fitted to each other, thereby improving the connection stability between the manifold 32 and the connecting member 33.

By providing a first end surface 327, a step structure is formed between the first end surface and the second connecting part 325, such that when the connecting member 33 sleeves the second connecting part 325, a limiting fit will be formed between the connecting member and the first end surface 327, thereby improving the assembly efficiency.

In some embodiments, one end, facing away from the first connecting part 324, of the second connecting part 325 is provided with a second end surface 328, and the second end surface 328 abuts against an end surface of the heat exchange tube 31; each support member 322 protrudes from the second end surface 328, and a supporting surface of each support member 322 is offset from the end surface of the heat exchange tube 31, so as to be fitted to an inner wall of the heat exchange tube 31.

Thus, the supporting surface of the support member 322 will be fitted to the inner wall of the heat exchange tube 31, thereby providing more stable support for the inner wall of the heat exchange tube 31 and ensuring a more stable connection between the heat exchange tube 31 and the manifold 32.

As shown in FIG. 7, in some embodiments, the manifold 32 further includes a wrapping part 329 disposed on the first connecting part 324; the wrapping part 329 is disposed surrounding an outer periphery of the second connecting part 325, the wrapping part and the second connecting part 325 are spaced apart from each other, and a limiting groove 330 is formed by a spacing therebetween; the limiting groove 330 is configured to be snap-fitted to the heat exchange tube 31.

Specifically, the wrapping part 329 is configured as a collar structure. The wrapping part 329 is disposed surrounding the outer periphery of the second connecting part 325, the wrapping part and the second connecting part 325 are spaced apart from each other, and the limiting groove 330 is formed by the spacing therebetween. The width of the limiting groove 330 matches the tube wall thickness of the heat exchange tube 31.

Thus, when the manifold 32 is connected to the heat exchange tube 31, the port of the heat exchange tube 31 may be snap-fitted to the limiting groove 330, thereby achieving the fixation of the port. Meanwhile, the wrapping part 329 wraps an outer periphery of the port of the heat exchange tube 31.

Further, the connecting member 33 is disposed surrounding an outer periphery of the wrapping part 329. When the connecting member 33 is fixed by the overmolding process, the wrapping part 329 will prevent the overflow of molten plastic into an interior of the heat exchange tube 31 or the manifold 32 during the injection molding process, thereby providing a certain protective effect.

In some embodiments, the battery 100 includes a plurality of battery cells 20 and a plurality of thermal management components 30, the plurality of battery cells 20 are arranged in a plurality of rows, and each row of the battery cells 20 is disposed between two adjacent thermal management components 30.

It can be understood that the shape of the outer surface of the heat exchange tube 31 may be changed based on the shape of the battery cell 20. For example, if the battery cell 20 is a rectangular parallelepiped, the heat exchange tube 31 may be a straight tube with an outer surface having a plane parallel to an outer surface of the battery cell 20, and the outer surface of the heat exchange tube 31 is in contact with the outer surface of the battery cell 20 to effectively increase the contact area. For another example, when the battery cell 20 is cylindrical, the heat exchange tube 31 may be wavy to match the shape of the battery cell 20.

Certainly, the outer surface of the heat exchange tube 31 may not be completely matched with and fitted to the outer surface of the battery cell 20.

Based on the same concept as the battery 100 described above, the present application further provides an electric device. The electric device includes the battery 100 as described above, and the battery 100 is configured to provide electric energy.

According to one or more embodiments, two manifolds 32 are first disposed at two opposite ends of the heat exchange tube 31 in the preset direction a, respectively. The end surface of the heat exchange tube 31 abuts against the end surface of the second connecting part 325. In addition, the support member 322 extends into the heat exchange flow channel 311, thereby providing support for the heat exchange flow channel 311. Meanwhile, the end surface of the heat exchange tube 31 abuts against the end surface of the second connecting part 325.

Further, the connecting member 33 is disposed surrounding the outer peripheries of the second connecting part 325 and the heat exchange tube 31, and the connecting member 33 is injection molded to the connection position between the second connecting part 325 and the heat exchange tube 31 by the overmolding process. Therefore, a connection gap between the second connecting part 325 and the heat exchange tube 31 is sealed while the second connecting part 325 is connected to the heat exchange tube 31.

Thus, the thermal management component 30 is assembled. During use, the thermal management component 30 is first disposed in the case 10, and a surface of the heat exchange tube 31 is fitted to the large surface of the battery cell 20. The heat exchange medium is introduced from the opening 321 of the manifold 32 on one side, and the heat exchange medium enters the heat exchange flow channel 311 and flows therein, and then flows out from the opening 321 of the manifold 32 on the other side. During this process, the heat exchange medium exchanges heat with the large surface of the battery cell 20 to regulate the temperature of the battery cell 20.

The technical features of the embodiments described above may be combined in any manner. For brevity, not all possible combinations of the technical features in the above embodiments are described. However, as long as no contradiction exists in the combinations of the technical features, such combinations should be considered to be within the scope of the specification.

The embodiments described above merely represent several implementations of the present application, and the description thereof is specific and detailed, but should not be understood as limiting the patent scope of the present application. It should be noted that various changes and modifications can be made by those of ordinary skill in the art without departing from the concept of the present application, and these changes and modifications shall all fall within the protection scope of the present application. Therefore, the protection scope of the patent in the present application shall be subject to the appended claims.

## Claims

1. A battery, comprising:
a case;
a battery cell, disposed in the case; and
a thermal management component, the thermal management component being disposed in the case and being configured to accommodate a heat exchange medium to regulate a temperature of the battery cell,
wherein the thermal management component comprises:
a heat exchange tube, provided with a heat exchange flow channel, an end part of the heat exchange tube being a port of the heat exchange flow channel; and
a manifold, engaged with the end part of the heat exchange tube and in communication with the port, a heat exchange medium being capable of flowing into the heat exchange flow channel via the manifold or flowing into the manifold via the heat exchange flow channel, wherein at least one of the manifold and the heat exchange tube is a plastic structure.

2. The battery according to claim 1, wherein the thermal management component further comprises:
a connecting member, connected between the heat exchange tube and the manifold and connected to side walls or outer peripheral walls of the manifold and the heat exchange tube.

3. The battery according to claim 2, wherein the connecting member is a plastic structure.

4. The battery according to claim 2 or 3, wherein the connecting member is of an annular structure and is disposed surrounding outer peripheries of the heat exchange tube and the manifold.

5. The battery according to any one of claims 1 to 4, wherein the manifold comprises a main body part and a plurality of support members, the main body part is engaged with the heat exchange tube, and the support members are spaced apart from each other in a circumferential direction of the main body part.

6. The battery according to claim 5, wherein when the main body part is engaged with the heat exchange tube, at least one support member extends into the heat exchange flow channel.

7. The battery according to claim 6, wherein when the main body part is engaged with the heat exchange tube, two support members extend into the heat exchange flow channel.

8. The battery according to any one of claims 5 to 7, wherein each support member is provided with a supporting surface, and the supporting surface and an inner wall of the heat exchange tube abut against each other.

9. The battery according to any one of claims 5 to 8, wherein the main body part comprises a first connecting part and a second connecting part formed on a surface of the first connecting part; a step surface is formed between the first connecting part and the second connecting part; one end of the connecting member wraps the step surface, and another end wraps an outer periphery of the heat exchange tube.

10. The battery according to claim 9, wherein the first connecting part is provided with a first end surface, the second connecting part is disposed on the first end surface, and the first end surface intersects the step surface;
the first end surface is configured to abut against an end surface of the connecting member for limiting.

11. The battery according to claim 9 or 10, wherein one end, facing away from the first connecting part, of the second connecting part is provided with a second end surface, and the second end surface abuts against an end surface of the heat exchange tube; each support member protrudes from the second end surface, and a supporting surface of each support member is offset from the end surface of the heat exchange tube, so as to be fitted to an inner wall of the heat exchange tube.

12. The battery according to any one of claims 9 to 11, wherein the manifold further comprises a wrapping part disposed on the first connecting part; the wrapping part is disposed surrounding an outer periphery of the second connecting part, the wrapping part and the second connecting part are spaced apart from each other, and a limiting groove is formed by a spacing therebetween; the limiting groove is configured to be snap-fitted to the heat exchange tube.

13. The battery according to any one of claims 1 to 12, wherein the battery comprises a plurality of battery cells and a plurality of thermal management components, the plurality of battery cells are arranged in a plurality of rows, and each row of the battery cells is disposed between two adjacent thermal management components.

14. An electric device, comprising the battery according to any one of claims 1 to 13, the battery being used for providing electric energy.
